# EUROPÄISCHE PATENTSCHRIFT

(11) **EP 1 749 336 B1**
(45) Veröffentlichungstag und Bekanntmachung des Hinweises auf die Patenterteilung: **22.10.2014**
(21) Anmeldenummer: 05731223.3
(22) Anmeldetag: 08.04.2005
(51) Int. Cl.: H02B 1/056

(54) **MODULARER STROMVERTEILER FÜR HOHE STRÖME**
MODULAR CURRENT DISTRIBUTOR FOR HIGH CURRENTS
DISTRIBUTEUR DE COURANT MODULAIRE DESTINE A DES COURANTS ELEVES

(30) Priorität: 24.05.2004 DE 202004008141 U
(43) Veröffentlichungstag der Anmeldung: 07.02.2007
(73) Patentinhaber: Ellenberger & Poensgen GmbH, D-90518 Altdorf (DE)
(72) Erfinder: BIRNER, Marcus, 90513 Zirndorf (DE)
(74) Vertreter: FDST Patentanwälte
(86) Internationale Anmeldenummer: PCT/EP2005/003700
(87) Internationale Veröffentlichungsnummer: WO 2005/117221

(56) Entgegenhaltungen:
- US-B1- 6 191 948

## Beschreibung

Die Erfindung bezieht sich auf einen Stromverteiler.

Ein Stromverteiler dient dazu, Strom aus einer Hauptstromleitung in eine Anzahl von Verbraucherstromkreisen abzuzweigen. Ein solcher Stromverteiler, wie er beispielsweise aus US 6,317,311 B1, US 6,560,123 B1 sowie US 6,002,580 A bekannt ist, trägt in der Regel eine der Anzahl der Verbraucherstromkreise entsprechende Zahl von Schutzschaltern, von denen jeweils einer in eine von der Hauptstromleitung abzweigende Anschlussleitung für einen Verbraucherstromkreis geschaltet ist und den entsprechenden Verbraucherstromkreis im Falle eines Überstroms von der Hauptstromleitung trennt. Ein Stromverteiler wird eingesetzt, um den Verschaltungsaufwand für ein herkömmliches Stromverteilungssystem zu reduzieren.

Ein aus US 6,191,948 B1 bekannter Stromverteiler ist aus einer Anzahl von Stromverteilermodulen gebildet, deren jedes Anschlussleitungen zur Stromzuführung an zwei Verbraucherstromkreise umfasst, wobei in jede Anschlussleitung jeweils ein Steckplatz zum Aufstecken eines Schutzschalters geschaltet ist. Als Hauptstromleitung sind durchgehende, starre Stromschienen vorgesehen, entlang derer die Stromverteilermodule aufreihbar sind.

Der Erfindung liegt die Aufgabe zugrunde, einen Stromverteiler anzugeben, der insbesondere für hohe Ströme vorteilhaft einsetzbar ist, und der rationell herstellbar und montierbar ist.

Diese Aufgabe wird erfindungsgemäß gelöst durch die Merkmale des Anspruchs 1. Danach ist ein modularer Aufbau des Stromverteilers vorgesehen. Der erfindungsgemäße Stromverteiler umfasst eine (erste) Hauptstromschiene als Hauptstromzuführung oder Einspeisung sowie eine Anzahl von Stromverteilermodulen, d.h. mindestens ein Stromverteilermodul, bevorzugt aber eine Mehrzahl derselben. Jedes der entlang der ununterbrochen geführten Hauptstromschiene aufreihbaren Stromverteilermodule ist dabei einem Schutzschalter zugeordnet und umfasst eine (erste) Anschlussleitung, mittels welcher Strom aus der Hauptstromschiene an einen Verbraucherstromkreis abzweigbar ist. Das oder jedes Stromverteilermodul umfasst ein flaches Gehäuse, an dessen Gehäusefrontseite ein Steckplatz zum Aufstecken eines Schutzschalters ausgebildet ist, und das in Querrichtung, das heißt von Stirnseite zu Stirnseite von einem (ersten) Kanal durchsetzt ist, der zur Aufnahme der ersten Hauptstromschiene dient.

Insbesondere im Hinblick auf einen vergleichsweise geringen Material- und Montageaufwand ist das Gehäuse des oder jeden Stromverteilermoduls zu einer Stirnseite hin offen ausgebildet. Das Gehäuse ist somit etwa schalenartig aufgebaut und umfasst einen das Gehäuse zu einer Stirnseite hin abschließenden Gehäuseboden sowie in Querrichtung verlaufende Seitenwände. Zur Versteifung des Gehäuses bei gleichzeitig vergleichsweise geringem Materialaufwand ist es ferner vorteilhaft, innerhalb des durch die Seitenwände gebildeten Rahmens in Querrichtung verlaufende Gehäusezwischenwände vorzusehen. Das so gestaltete Gehäuse ist somit etwa setzkastenartig ausgebildet.

Der Kanal ist dabei derart bezüglich des Steckplatzes angeordnet, dass eine erste Kontaktöffnung des Steckplatzes mit dem Kanal korrespondiert, das heißt der Kanal durch die erste Kontaktöffnung von der Gehäuseaußenseite her zugänglich ist. Eine zweite Kontaktöffnung des Steckplatzes korrespondiert mit einer Gehäuseaufnahme für eine Anschlussbuchse der ersten Anschlussleitung.

Die modulare Bauweise des Stromverteilers ermöglicht einen hohen Vorfertigungsgrad und führt damit zu vergleichsweise geringen Herstellungs- und Montagekosten. Insbesondere kann der Stromverteiler durch Aneinanderreihung einer entsprechenden Anzahl von Stromverteilermodulen besonders einfach an eine gewünschte Anzahl anzuschließender Verbraucherstromkreise angepasst werden. Infolge der flachen Bauform eines jeden Stromverteilermoduls können diese dabei analog zu Reiheneinbaugeräten aneinander angesetzt werden. Hierdurch wird eine besonders kompakte Bauform des Stromverteilers erzielt. Die Hauptstromschiene durchsetzt dabei die fluchtend miteinander angeordneten Kanäle der aneinander gereihten Stromverteilermodule und bildet somit eine gemeinsame Stromeinspeisung.

In einer bevorzugten Ausführungsform umfasst der Stromverteiler eine zweite Hauptstromschiene zur gemeinsamen Rückführung des in die Verbraucherstromkreise eingespeisten Stroms. In dieser Ausführung umfasst das oder jedes Stromverteilermodul einen zweiten Kanal zur Aufnahme dieser zweiten Hauptstromschiene, der das Gehäuse ebenfalls in Querrichtung durchsetzt. Des Weiteren umfasst das oder jedes Stromverteilermodul eine zweite Anschlussleitung zur Stromrückführung aus dem Verbraucherstromkreis, die zur Kontaktierung der zweiten Hauptstromschiene in den zweiten Kanal hineinsteht.

Eine besonders einfache Montage des Stromverteilers wird vorzugsweise dadurch erzielt, dass der oder jeder Kanal an einer Gehäuseseitenfläche angeordnet und mittels einer Abdeckung zu dieser Seitenfläche hin aufdeckbar und abdeckbar ist. Als Gehäuseseitenflächen sind insbesondere die an die Frontfläche angrenzenden Schmalseiten des Gehäuses, insbesondere die Gehäuseoberseite und Gehäuseunterseite, bezeichnet. Als Abdeckung wird ein lösbar an dem Gehäuse befestigbarer Teil der Gehäusewand bezeichnet. Die Abdeckung kann vollständig von dem Gehäuse abnehmbar sein. Bevorzugt ist die Abdeckung aber als Klapplasche ausgebildet, die mittels eines Filmscharniers an dem Gehäuse befestigt ist. Die vorstehend beschriebene Ausbildung der Kanäle am Gehäuserand erlaubt eine vereinfachte Montage des Stromverteilers, zumal der oder jeder Kanal eines jeden Stromverteilermoduls bei geöffneter Abdeckung von außen zugänglich ist. Auf diese Weise kann die oder jede Stromschiene besonders einfach von der Gehäuseaußenseite her in den zugehörigen Kanal bzw. die fluchtenden Kanalstücke der aneinandergereihten Stromverteilermodule eingelegt werden. Durch einfaches Befestigen der Abdeckung an dem jeweiligen Gehäuse wird auf diese Weise die Stromschiene im Gehäuseinneren berührungssicher geschützt.

In montiertem Zustand wird die offene Stirnseite eines Stromverteilermoduls durch den Gehäuseboden eines benachbarten Stromverteilermoduls abgeschlossen. Um die Stirnseite eines in einer Reihe von Stromverteilermodulen äußersten Stromverteilermoduls abzudecken, ist vorzugsweise eine Abschlussplatte vorgesehen, die auf diese Stirnseite aufsetzbar ist. Diese Abschlussplatte ist dabei zweckmäßigerweise mit einer oder mehreren Durchführungen versehen, von denen jeweils eine mit einem Kanal des angrenzenden Stromverteilermoduls fluchtet.

Für einen einfachen Anschluss eines Verbraucherstromkreises ist ein Anschlussende der ersten und gegebenenfalls der zweiten Anschlussleitung bevorzugt von der Gehäuserückwand des oder jeden Stromverteilermoduls zugänglich. Insbesondere ist dabei das entsprechende Anschlussende durch die Gehäuserückwand nach außen geführt. Alternativ dazu ist aber auch denkbar, die erste und/oder die zweite Anschlussleitung zu der Gehäuseoberseite oder Gehäuseunterseite aus dem Gehäuse herauszuführen.

Indem die Anschlussbuchse der ersten Anschlussleitung des oder jeden Stromverteilermoduls mit Spiel in der zugehörigen Gehäuseaufnahme gehalten ist, wird in einer vorteilhaften Ausführung der Erfindung das Aufstecken und Abziehen eines Schutzschalters auf den bzw. von dem entsprechenden Steckplatz erleichtert. Insbesondere werden hierdurch Fertigungs- und Montagetoleranzen ausgeglichen, die bei einem starren Kontaktsystem das Aufschieben des Schutzschalters in der Regel erheblich erschweren würden. Die flexible Halterung der Anschlussbuchse im Gehäuse ist vor allem insofern vorteilhaft, als der Stromverteiler bevorzugt für eine hohe Stromaufnahme konzipiert ist, und die Leitungs- und Kontaktelemente entsprechen massiv und starr ausgebildet sind.

Um die Steckbarkeit eines Schutzschalters weiter zu verbessern, ist bevorzugt vorgesehen, die erste Anschlussleitung nicht vollständig starr auszubilden. Vielmehr ist in der ersten Anschlussleitung in Form einer insbesondere schlaufenförmigen Litzenverbindung eine Art Gelenk vorgesehen, durch welches die Anschlussbuchse mechanisch flexibel mit einem starren Leiterelement verbunden ist.

Optional umfasst der Stromverteiler mindestens einen Signalpfad, über den ein dem Zustand eines oder mehrerer Schutzschalter entsprechendes Signal abgefragt werden kann. Zur Bildung eines solchen Signalpfads umfasst mindestens ein Stromverteilermodul des Stromverteilers einen oder mehrere Signalleiter. Der oder jeder Signalleiter durchzieht das Gehäuse des Stromverteilermoduls im Wesentlichen in Querrichtung und weist an einer Stirnseite ein erstes Kontaktelement sowie an der entgegengesetzten Stirnseite ein zweites Kontaktelement auf, wobei das erste und das zweite Kontaktelement zur Kontaktierung eines entsprechenden Signalleiters eines jeweils benachbarten Stromverteilermoduls ausgebildet sind. Bevorzugt sind dabei das erste und das zweite Kontaktelement zueinander komplementär ausgebildet, bilden also ein zueinander passendes Stecker-Buchsen-Paar. Hierdurch wird erreicht, dass beim Aneinanderreihen mehrerer Stromverteilermodule die korrespondierenden Signalleiter der benachbarten Module sich gegenseitig kontaktieren und somit ein oder mehrere Signalpfade geschlossen werden, die sich in Querrichtung über mehrere Stromverteilermodule oder sogar die gesamte Länge des Stromverteilers erstrecken.

Um einen Signalkontakt eines Schutzschalters zu kontaktieren, umfasst mindestens ein Stromverteilermodul mindestens einen Signalleiter, der zusätzlich zu einem (ersten und/oder zweiten) Kontaktelement zur Kontaktierung eines Signalleiters eines benachbarten Stromverteilermoduls einen Anschlüsskontakt aufweist, der mit einer Kontaktöffnung des Steckplatzes korrespondiert. Infolge der modularen Bauweise des Stromverteilers sind auch der oder die Signalpfade einfach und flexibel anpassbar. Insbesondere kann die Signalisation wahlweise in Parallel- oder Reihenschaltungsausführung oder einer beliebigen Mischform realisiert werden.

Für eine einfache und hochstromfeste Kontaktierung eines Schutzschalters mit der ersten Hauptstromschiene ist vorgesehen, dass die erste Hauptstromschiene eine Anzahl von Kontaktaufnahmen, insbesondere Kontaktbohrungen, zur Aufnahme eines Steckkontaktes des Schutzschalters aufweist, wobei eine Kontaktaufnahme jeweils mit der ersten Kontaktöffnung des Steckplatzes eines jeden Stromverteilermoduls fluchtet.

Eine besonders hohe Stromaufnahme wird bevorzugt dadurch erreicht, dass die oder jede Hauptstromschiene als massive Metallschiene mit rechteckigem Querschnitt ausgebildet ist. Der Flächeninhalt des Querschnitts beträgt dabei zweckmäßigerweise zwischen 250 mm² und 700 mm². In bevorzugter Dimensionierung hat die oder jede Hauptstromschiene im Querschnitt eine Ausdehnung von 20 mm x 25 mm. Der Querschnitt hat somit bevorzugt einen Flächeninhalt von ca. 500 mm². Die Stromeinspeisung in die oder jede Hauptstromschiene findet wahlweise links oder rechts der aneinander gereihten Stromverteilermodule statt. Alternativ kann die Stromeinspeisung auch mittig zwischen zwei Blöcken von Stromverteilermodulen stattfinden. In ersterem Fall ist die oder jede Hauptstromschiene bevorzugt für einen eingespeisten Summenstrom von 600 A, bei mittiger Einspeisung für einen Summenstrom bis 1.200 A ausgelegt. Pro Stromverteilermodul, und damit pro Steckplatz ist der Stromverteiler für eine Nennbelastung bis maximal 125 A ausgelegt.

Nachfolgend werden Ausführungsbeispiele der Erfindung anhand einer Zeichnung näher, erläutert. Darin zeigen:
- Fig. 1: in perspektivischer Explosionsdarstellung einen Stromverteiler mit einer ersten Hauptstromschiene als gemeinsame Stromeinspeisung, einer zweiten Hauptstromschiene als gemeinsame Stromableitung sowie mit drei Stromverteilermodulen zur Abzweigung von Strom in jeweils einen Verbraucherstromkreis,
- Fig. 2: in perspektivischer Darstellung den Stromverteiler gemäß Fig. 1 mit in die Stromverteilermodule eingesetzten Hauptstromschienen,
- Fig. 3: in perspektivischer Explosionsdarstellung ein Stromverteilermodul des Stromverteilers gemäß Fig. 1,
- Fig. 4: in Seitenansicht das Stromverteilermodul gemäß Fig. 3,
- Fig. 5: in perspektivischer Explosionsdarstellung fünf alternative Ausführungsvarianten (Fig. 5a-e) eines Signalleiters des Stromverteilermoduls gemäß Fig. 4,
- Fig. 6: in Frontansicht drei aneinandergereihte Stromverteilermodule des Stromverteilers gemäß Fig. 1 mit paralleler Signalisationsbeschaltungsbeschaltung,
- Fig. 7: in Darstellung gemäß Fig. 8 die Stromverteilermodule mit serieller Signalisation, und
- Fig. 8: in Darstellung gemäß Fig. 8 die Stromverteilermodule mit serieller Signalisationsbeschaltung und rückgeführtem Signalpfad.

Einander entsprechende Teile und Größen sind in allen Figuren stets mit den gleichen Bezugszeichen versehen.

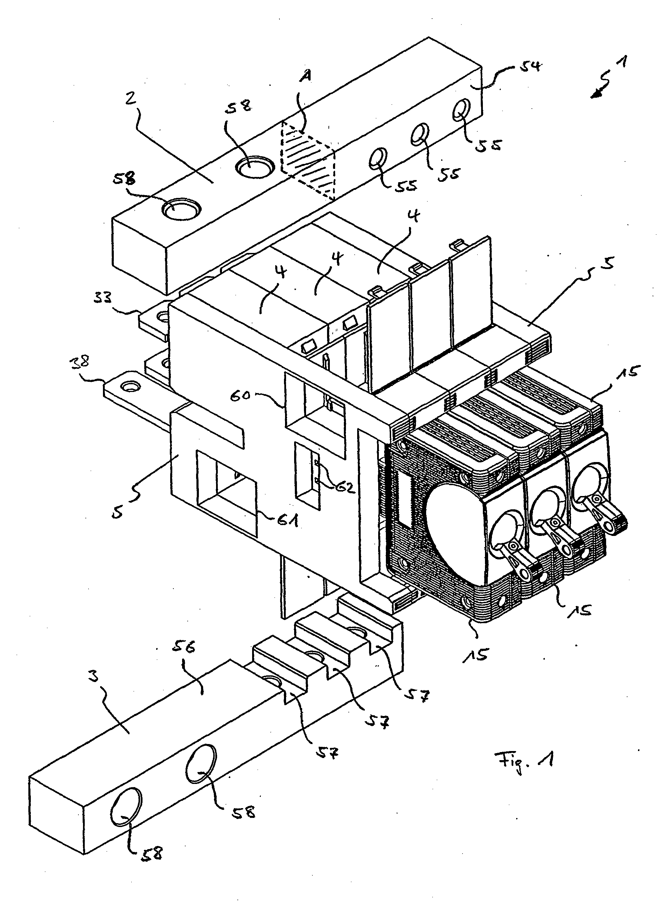

Der in Fig. 1 in Explosionsdarstellung gezeigte Stromverteiler 1 umfasst eine erstes Hauptstromschiene 2 als gemeinsame Stromzuführung oder Stromeinspeisung, sowie eine zweite Hauptstromschiene 3 als gemeinsame Stromableitung.

Der Stromverteiler 1 umfasst des Weiteren drei Stromverteilermodule 4, deren jedes zur Abzweigung von Strom aus der ersten Hauptstromschiene 2 an einen Verbraucherstromkreis sowie Zurückführung des Stroms aus dem Verbraucherstromkreis in die zweite Hauptstromschiene 3 dient. Die drei Stromverteilermodule 4 sind stirnseitig aneinander angesetzt. Der durch die drei aneinandergereihten Stromverteilermodule 4 gebildete Block wird durch jeweils eine Abschlussplatte 5 stirnseitig nach außen abgeschlossen.

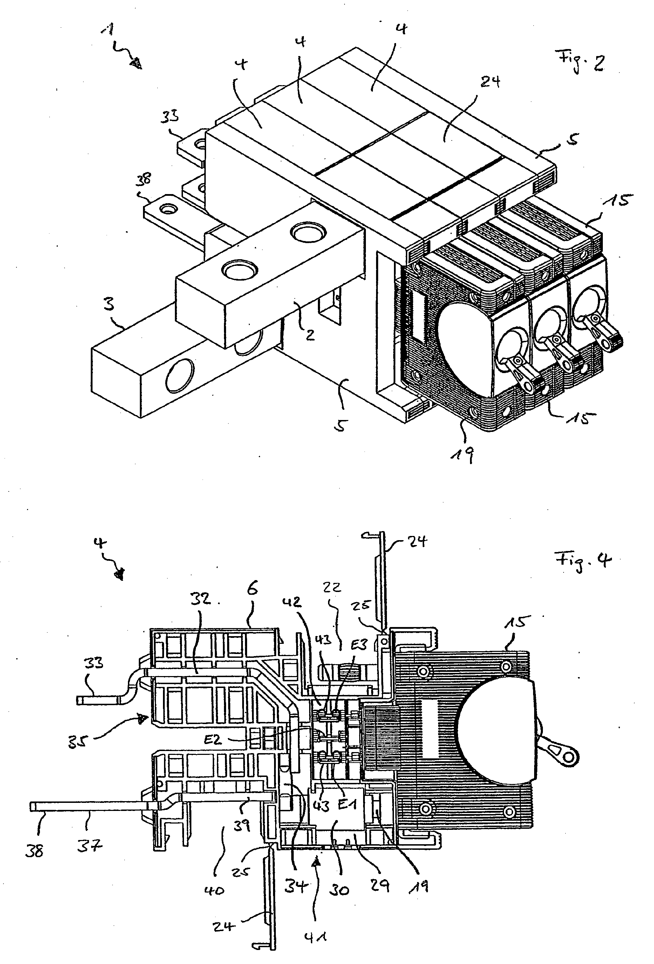

In Fig. 2 ist der Stromverteiler 1 mit in die Stromverteilermodule 4 eingesetzten Hauptstromschienen 2 und 3 dargestellt.

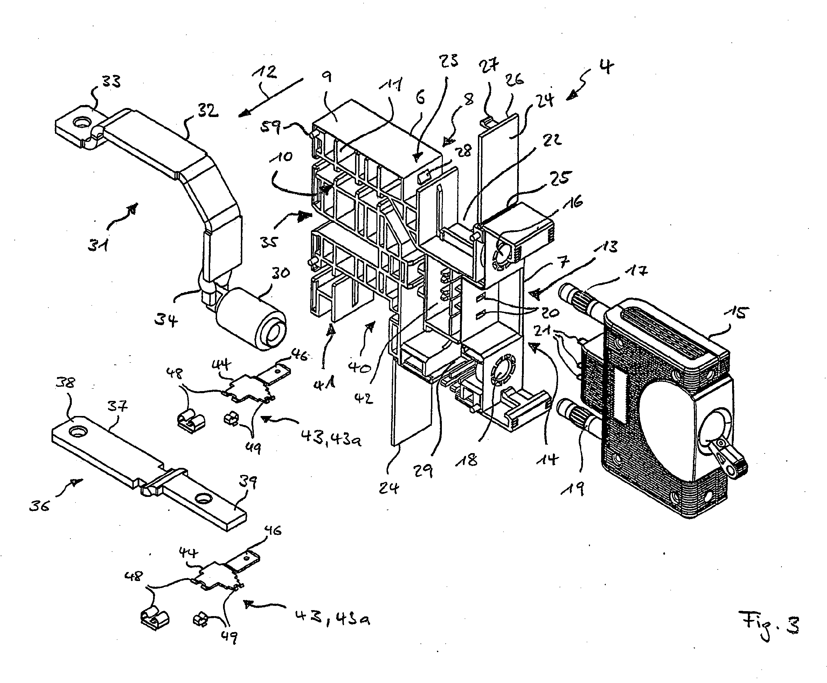

Ein Stromverteilermodul 4 ist in Fig. 3 in Explosionsdarstellung näher dargestellt. Wie aus dieser Darstellung erkennbar, umfasst das Stromverteilermodul 4 ein flaches Gehäuse 6 aus Isoliermaterial, insbesondere Kunststoff. Das Gehäuse 6 ist schalenartig aufgebaut und weist einen (in der Darstellung gemäß Fig. 3 weitgehend verborgenen) Gehäuseboden 7 auf, welcher die in der Perspektive gemäß Fig. 3 abgewandte Gehäusestirnseite (nachfolgend kurz Stirnseite 8) im Wesentlichen abdeckt, und von welchem Gehäuseseitenwände 9 senkrecht, und damit in Richtung der entgegengesetzten (Gehäuse-)Stirnseite 10 abstehen. Das Gehäuse 6 ist weiterhin durch ebenfalls senkrecht von dem Gehäuseboden 7 abstehende und netzartig verbundene Zwischenwände 11 versteift. An der von dem Gehäuseboden 7 abgewandten Stirnseite 10 ist das Gehäuse 6 offen. Mit anderen Worten weist das aus dem Gehäuseboden 7, den Gehäuseseitenwänden 9 und den Zwischenwänden 11 gebildete Gehäuse 6 eine setzkastenartige Struktur auf. Die auf den Gehäuseboden 7 senkrechte Erstreckungsrichtung der Gehäuseseitenwände 9 und Zwischenwände 11 ist auch als Querrichtung 12 bezeichnet.

An einer als Gehäusefrontseite 13 vorgesehenen Schmalseite des Gehäuses 6 ist ein Steckplatz 14 für einen Schutzschalter 15 ausgebildet. Der Steckplatz 14 weist eine erste Kontaktöffnung 16 für einen (bevorzugt als Lamellenstecker oder Bolzenstecker ausgebildeten) ersten Steckkontakt 17 des Schutzschalters 15 sowie eine zweite Kontaktöffnung 18 für einen (bevorzugt ebenfalls als Lamellenstecker oder Bolzenstecker ausgebildeten) zweiten Steckkontakt 19 des Schutzschalters 15 auf. Der Steckplatz 14 ist außerdem mit drei weiteren Kontaktöffnungen 20 für (bevorzugt als Flachstecker ausgebildete) korrespondierende Signalkontakte 21 des Schutzschalters 15 versehen. Die erste Kontaktöffnung 16 mündet in einen ersten Kanal 22, der das Gehäuse 6 in Querrichtung 12 vollständig durchsetzt und zur Aufnahme der ersten Stromschiene 2 vorgesehen ist. Der erste Kanal 22 ist an einer Oberseite 23 des Gehäuses 6 angeordnet, und ist in der Darstellung gemäß Fig. 3 zu dieser Oberseite 23 hin offen. Um den Kanal 22 bedarfsweise abdecken zu können, ist eine Abdeckung 24 vorgesehen. Die Abdeckung 24 ist als Klapplasche ausgebildet und an einem Rand des Kanals 22 mittels eines Filmscharniers 25 am Gehäuse 6 schwenkbeweglich befestigt. Das Freiende 26 der Abdeckung 24 trägt ein hakenähnliches Rastelement 27, mittels welchem die Abdeckung 24 in über den Kanal 22 verschwenktem Zustand an einem korrespondierenden Widerlager 28 des Gehäuses 6 verrastet werden kann. In diesem Zustand schließt die Abdeckung 24 mit der die Oberseite 23 bildenden Gehäuseseitenwand 9 plan ab. Der Kanal 22 ist hierdurch abgedeckt.

Die zweite Kontaktöffnung 18 des Steckplatzes 14 mündet in eine Gehäuseaufnahme 29, die zur Aufnahme einer Anschlussbuchse 30 für den Steckkontakt 19 des Schutzschalters 15 vorgesehen ist.
Die Anschlussbuchse 30 ist Bestandteil einer ersten Anschlussleitung 31. Diese Anschlussleitung 31 umfasst des Weiteren ein starres, etwa L-förmig gebogenes Leiterelement 32, das an seiner von der Anschlussbuchse 30 abgewandten Seite ein Anschlussende 33 zum Anschluss eines Verbraucherstromkreises aufweist. Der elektrische Kontakt zwischen der Anschlussbuchse 30 und dem Leiterelement 32 wird durch eine Litzenschlaufe 34 hergestellt, die mit beiden Enden an der Anschlussbuchse 30, und im Schlaufenbereich an dem Leiterelement 32 verlötet ist.

Wie insbesondere aus Fig. 4 hervorgeht, ist das Leiterelement 32 ortsfest im Gehäuse 6 fixiert, so dass das Anschlussende 33 des Leiterelements 32 aus einer Rückwand 35 des Gehäuses 6 herausragt. Die Anschlussbuchse 30 liegt dagegen mit Spiel in der zugehörigen Gehäuseaufnahme 29 ein. Infolge der mechanischen Flexibilität der Litzenschlaufe 34 ist die Anschlussbuchse 30 somit gegenüber dem Gehäuse 6 und dem mit diesem ortsfesten Leiterelement 32 beweglich. Diese flexible Halterung der Anschlussbuchse 30 dient dem Ausgleich von Fertigungstoleranzen und verbessert damit die Steckbarkeit des Schutzschalters 15 in den Steckplatz 14, zumal sich die Anschlussbuchse 30 der Lage des korrespondierenden Steckkontakts 19 beim Aufstecken des Schutzschalters 15 anpasst, wodurch ein Verkanten oder Verklemmen des Schutz schalters 15 vermieden ist.

Zur Rückführung des Stroms aus dem Verbraucherstromkreis in die zweite Hauptstromschiene 3 umfasst das Stromverteilermodul 4 eine zweite Anschlussleitung 36 (Fig. 3), die aus einem starren und im Wesentlichen ebenen Leiterelement 37 gebildet ist. Das Leiterelement 37 ist in dem Gehäuse 6 ortsfest aufgenommen (Fig. 4), so dass es mit einem Anschlussende 38 über die Rückwand 35 des Gehäuses 6 hinaussteht. Das dem Anschlussende 38 entgegengesetzte Ende 39 des Leiterelements 37 dient zu dessen Kontaktierung mit der zweiten Hauptstromschiene 3 und steht zu diesem Zweck in einen zur Aufnahme der zweiten Hauptstromschiene 3 bestimmten zweiten Kanal 40 des Gehäuses 6 hinein. Dieser zweite Kanal 40 ist an einer Unterseite 41 des Gehäuses 6 ausgebildet und in dem in Fig. 3 und 4 gezeigten Zustand zu dieser Unterseite 41 hin offen. An einem Rand des Kanals 40 ist wiederum eine als Klapplasche ausgebildete Abdeckung 24 mittels eines Filmscharniers 25 am Gehäuse 6 befestigt, so dass auch der Kanal 40 durch Verschwenken und Verrasten der Abdeckung 24 am Gehäuse 6 verdeckt werden kann.

Die Kontaktöffnungen 20 des Steckplatzes 14 münden in eine zwischen der Gehäuseaufnahme 29 und dem Kanal 22 angeordnete Gehäuseaufnahme 42 für eine Anzahl von maximal drei Signalleitem 43, die zur Übermittlung von Niederspannungssignalen dienen, welche beispielsweise den Schaltzustand eines oder mehrerer Schutzschalter 15 angeben.

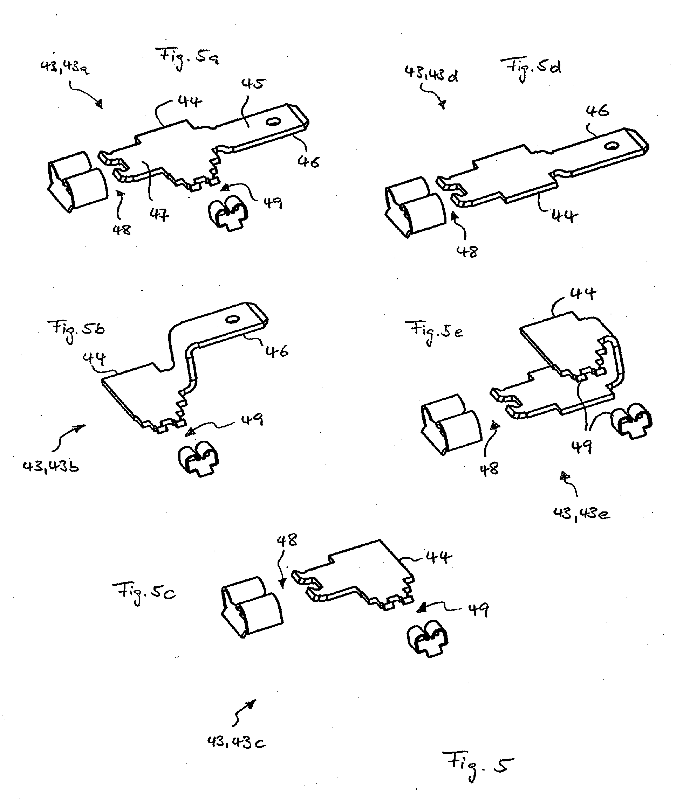

In den Fig. 3 und 4, sowie nochmals in Fig. 5a in vergrößerter Einzeldarstellung, ist eine erste Ausführungsvariante 43a des Signalleiters 43 abgebildet. Die Ausführungsvariante 43a umfasst ein im Wesentlichen ebenes Leiterelement 44 aus metallischem Flachbandmaterial. An einem Querende 45 des Leiterelements 44 ist ein als Flachstecker ausgeführtes erstes Kontaktelement 46 ausgebildet. Das entgegengesetzte Querende 47 des Leiterelements 44 trägt ein zweites Kontaktelement 48, das als Klemmschuh für einen dem Kontaktelement 46 entsprechenden Flachstecker ausgeführt ist. Die Kontaktelemente 46 und 48 sind damit insbesondere im Sinne eines Stecker-Buchsen-Paares zueinander komplementär. Zwischen den Kontaktelementen 46 und 48 trägt das Leiterelement 44 einen Anschlusskontakt 49, der wiederum als Klemmschuh für einen Flachstecker ausgebildet ist und zur Kontaktierung mit einem Signalkontakt 21 des Schutzschalters 15 dient.

Wie insbesondere in Zusammenschau der Fig. 3 und 4 erkennbar ist, kann ein Signalleiter 43 in der Gehäuseaufnahme 42 in drei Ebenen E1, E2 und E3 angeordnet werden, deren jede mit einer Kontaktöffnung 20 des Steckplatzes 14 korrespondiert. Gemäß den Fig. 3 und 4 sind die Ebenen E1 und E3 mit je einem Signalleiter 43 belegt, während in der Ebene E2 kein Signalleiter angeordnet ist.

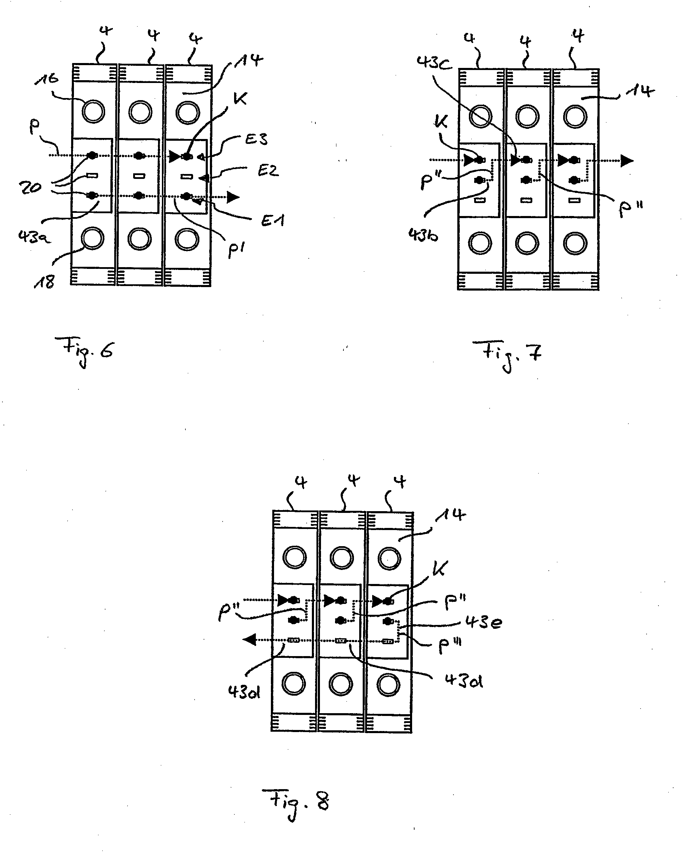

Die Kontaktelemente 46 und 48 dienen zur Durchkontaktierung des Signalleiters 43 mit korrespondierenden Signalleitern 43 benachbarter Stromverteilermodule 4. Hierfür ist das Kontaktelement 46 an der Stirnseite 8, und das Kontaktelement 48 an der Stirnseite 10 des Stromverteilermoduls 4 angeordnet und von außen zugänglich. Sofern bei zwei benachbarten Stromverteilermodulen 4 auf der gleichen Ebene E1 bis E3 je ein Signalleiter 43 vorhanden ist, kontaktiert das Kontaktelement 46 des einen Signalleiters 43 beim Aneinanderfügen der Stromverteilermodule 4 automatisch das Kontaktelement 48 eines benachbarten Stromverteilermoduls 4. Auf diese Weise bilden die Signalleiter 43 der aneinander gereihten Stromverteilermodule 4 einen über mehrere Stromverteilermodule 4 reichenden Signalpfad P aus, wie er beispielsweise in Fig. 6 schematisch dargestellt ist.

Anstelle der vorstehend beschriebenen Ausführungsvariante 43a des Signalleiters 43 können wahlweise weitere Ausführungsvarianten 43b-e des Signalleiters 43 in die Gehäuseaufnahme 42 eingeschoben werden, die in den Fig. 5b bis 5e abgebildet sind. Bei den Ausführungsvarianten 43b und 43c gemäß Fig. 5b bzw. 5c ist nur jeweils eines der Kontaktelemente 46 oder 48 sowie der Anschlusskontakt 49 vorhanden. Die in Fig. 5b dargestellte Ausführungsvariante 43b weist zusätzlich die Besonderheit auf, dass das Kontaktelement 46 schwanenhalsartig aus der Ebene des Leiterelements 44 herausgebogen ist. Hiermit lässt sich ein zwischen zwei Ebenen E1, E2, E3 wechselnder Signalpfad P" aufbauen (vgl. Fig. 7 und 8). Bei der Ausführungsvariante 43d ist hingegen der Anschlusskontakt 49 weggelassen. Unter Verwendung dieser Ausführungsvariante 43d kann ein Signalpfad P'" über den Bereich eines Stromverteilermoduls 4 überbrückt werden, ohne die zugehörige Kontaktöffnung 20 zu belegen (vgl. Fig. 8). Mittels der Ausführungsvariante 43e gemäß Fig. 5e kann schließlich ein Signalpfad P'" in einer benachbarten Ebene E1,E2,E3 entgegen der ursprünglichen Signalisationsrichtung zurückgeführt werden. (vgl. Fig. 8)

Wie in den Fig. 6 bis 8 schematisch dargestellt ist, lassen sich durch geeignete Bestückung der aneinandergereihten Stromverteilermodule 4 mit den Ausführungsvarianten 43a-e des Signalleiters 43 verschiedenartige Signalpfade P, P', P",P'" aufbauen. Die Fig. 6 bis 8 zeigen jeweils drei aneinander gereihte Stromverteilermodule 4 in Frontansicht, d.h. mit Blick auf den Steckplatz 14, so dass insbesondere die in den drei Ebenen E1, E2 und E3 übereinander angeordneten Kontaktöffnungen 20 erkennbar sind. Eine gepunktete Linie deutet jeweils einen Signalpfad P, P', P",P'" an, d.h. eine leitende Verbindung zwischen zwei oder mehreren Kontaktöffnungen 20, an. Durch einen schwarzen Punkt K im Bereich einer Kontaktöffnung 20 ist dabei angedeutet, dass der entsprechenden Kontaktöffnung 20 ein Anschlusskontakt 49 zugeordnet ist.

Das in Fig. 6 dargestellte Schema entspricht einer Konfiguration der Stromverteilermodule 4 gemäß den Fig. 3 und 4. Jeder Kontaktöffnung 20 der Ebene E1 und jeder Kontaktöffnung 20 der Ebene E3 ist hier ein Signalleiter 43 in der Ausführungsvariante 43a zugeordnet, so dass die Kontaktöffnungen 20 der Ebene E3 einerseits, und die Kontaktöffnungen 20 der Ebene E1 andererseits in jeweils einen Signalpfad P,P' eingebunden sind. In einer alternativen Konfiguration der Stromverteilermodule 4 gemäß Fig. 7 wird durch Kombination der Ausführungsvarianten 43b und 43c des Signalleiters 43 erreicht, dass jeweils zwischen einer Kontaktöffnung 20 der Ebene E2 und einer in der Ebene E3 angeordneten Kontaktöffnung 20 eines benachbarten Stromverteilermoduls 4 ein Signalpfad P" gebildet ist. Eine Modifikation der letztgenannten Signalisationsbeschaltung ist in Fig. 8 dargestellt. Hier ist unter Verwendung eines Signalleiters 43 in der Ausführungsvariante 43e ein von der der Ebene E2 zugeordneten Kontaktöffnung 20 des in Signalisationsrichtung letzten Stromverteilermoduls 4 ausgehender Signalpfad P'" in die Ebene E1 umgeleitet, wo der Signalpfad P'" durch Signallleiter 43 der Ausführungsvariante 43d entlang der Stromverteilermodule 4 zurückgeführt ist, ohne die auf diesem Weg liegenden Kontaktöffnungen 20 zu belegen.

Innerhalb eines jeden Schutzschalters 15 sind die Signalkontakte 21 bevorzugt derart beschaltet, dass der mit der Ebene E3 korrespondierende Signalkontakt 21 mit dem mit der Ebene E1 korrespondierenden Signalkontakt 21 kurzgeschlossen ist, wenn der Schutzschalter 15 sperrt, und dass der mit der Ebene E3 korrespondierende Signalkontakt 21 mit dem mit der Ebene E2 korrespondierenden Signalkontakt 21 dann kurzgeschlossen ist, wenn der Schutzschalter 15 durchgeschaltet ist. Durch Anlegen einer Signalspannung an den mit der Ebene E3 korrespondierenden Signalkontakt 21 kann somit an den mit den Ebenen E1 und E2 korrespondierenden Signalkontakten 21 der Schaltzustand des Schutzschalters 15 abgefragt werden.

In der Beschaltung gemäß Fig. 6 sind die Schutzschalter 15 bezüglich der Signalisation parallel geschaltet. Wird an den Signalpfad P eine Signalspannung angelegt, so liegt an dem Signalpfad P' dann Spannung an, wenn mindestens einer der aufgesteckten Schutzschalter 15 sperrt.

Gemäß den Fig. 7 und 8 sind die auf die Stromverteilermodule 4 aufgesteckten Schutzschalter 15 bezüglich der Signalisation seriell geschaltet. Die hintereinandergeschalteten Signalpfade P" und ggf. P'" sind genau dann durchgängig, wenn alle Steckplätze 14 mit Schutzschaltern 15 belegt sind und alle Schutzschalter 15 durchgeschaltet sind.

Die beiden Hauptstromschienen 2 und 3 sind als im Wesentlichen massive Kupferschienen mit rechteckigem Querschnitt A ausgeführt (Fig. 1). Jede Hauptstromschiene 2,3 ist für eine Stromaufnahme von 600 A ausgelegt. Der Querschnitt A einer jeden Hauptstromschiene 2,3 weist bevorzugt eine Dimensionierung von ca. 20 mm x 25 mm, und damit einen Flächeninhalt von ca. 500 mm² auf.

Die erste Hauptstromschiene 2 ist an ihrer Frontseite 54 mit einer der Anzahl von Bohrungen 55 (Fig. 1) versehen, deren jede als Kontaktbuchse für den Steckkontakt 17 eines Schutzschalters 15 dient. In die Oberseite 56 der zweiten Hauptstromschiene 3 sind eine Anzahl von Nuten 57 eingebracht, deren jede als Aufnahme für das Ende 39 eines Leiterelements 37 bestimmt ist. Zur Herstellung eines guten elektrischen Kontakts ist vorgesehen, das Ende 39 eines jeden Leiterelements 37 in der zugehörigen Nut 57 zu verschrauben. Zudem weist jede Hauptstromschiene 2,3 mindestens einen Schraubabschluss 58 zum Anschließen einer Hauptstromversorgung auf.

Zur Montage des Stromverteilers 1 wird eine der Anzahl der anzuschließenden Verbraucherstromkreise entsprechende Zahl von Stromverteilermodulen 4 gemäß Fig. 1 stirnseitig aneinandergereiht. Dabei werden die Stromverteilermodule 4 durch an der Stirnseite 10 eines jeden Gehäuses 6 angebrachte Führungszapfen 59 (Fig. 3), die in entsprechende Aufnahmen (nicht explizit dargestellt) an der Stirnseite 8 eines benachbarten Stromverteilermoduls 4 eingreifen, fluchtend und lösbar miteinander verbunden. Die offene Stirnseite 10 des Gehäuses 6 eines Stromverteilermoduls 4 wird dabei durch den Gehäuseboden 7 eines benachbarten Stromverteilermoduls 4 abgeschlossen.

Anschließend werden die Hauptstromschienen 2 und 3 in den jeweiligen, zur Oberseite 23 bzw. Unterseite 41 offenen Kanal 22 bzw. 40 eingelegt. Die Bohrungen 55 der ersten Hauptstromschiene 2 werden hierdurch derart bezüglich der Stromverteilermodule 4 positioniert, dass jeweils eine Bohrung 55 mit der Kontaktöffnung 16 eines Steckplatzes 14 fluchtet. Ebenso werden die Nuten 57 der zweiten Hauptstromschiene 3 derart bezüglich der Stromverteilermodule 4 positioniert, dass in jeweils einer Nut 57 das Ende 39 eines Leiterelements 37 einliegt.

Nach Verschrauben der Leiterelemente 37 mit der zweiten Hauptstromschiene 3 werden die Abdeckungen 24 gemäß Fig. 2 über den jeweiligen Kanal 22 bzw. 40 verschwenkt und am Gehäuse 6 verrastet. Außerdem werden die Abschlussplatten 5 auf die Hauptstromschienen 2 und 3 aufgeschoben und mit dem jeweils angrenzenden äußeren Stromverteilermodul 4 verbunden. Jede Abschlussplatte 5 ist hierfür mit Durchführungen 60 und 61 versehen, die mit den Kanälen 22 bzw. 40 der Stromverteilermodule 4 fluchten. Jede Abschlussplatte 5 ist weiterhin mit einer Anzahl von Öffnungen 62 versehen, durch welche hindurch die Signalleiter 43 des angrenzenden Stromverteilermoduls 4 kontaktierbar sind.

Nach Aufstecken eines Schutzschalters 15 auf einen Steckplatz 14 eines Stromverteilermoduls 4 sind die Enden eines Verbraucherstromkreises an die Anschlussenden 33 und 38 des Stromverteilermoduls 4anschließbar. Das mit dem Anschlussende 33 kontaktierte Ende des Verbraucherstromkreises ist dabei über die Anschlussleitung 31 und den Schutzschalter 15 mit der Hauptstromschiene 2 verbunden. Das mit dem Anschlussende 38 kontaktierte Ende des Verbraucherstromkreises ist über die Anschlussleitung 36 mit der Hauptstromschiene 3 verbunden.

**Bezugszeichenliste**

| | | | |
|---|---|---|---|
| 1 | Stromverteiler | 31 | Anschlussleitung |
| 2 | Hauptstromschiene | 32 | Leiterelement |
| 3 | Hauptstromschiene | 33 | Anschlussende |
| 4 | Stromverteilermodul | 34 | Litzenschlaufe |
| 5 | Abschlussplatte | 35 | Rückwand |
| 6 | Gehäuse | 36 | Anschlussleitung |
| 7 | Gehäuseboden | 37 | Leiterelement |
| 8 | Stirnseite | 38 | Anschlussende |
| 9 | Gehäuseseitenwand | 39 | Ende |
| 10 | Stirnseite | 40 | Kanal |
| 11 | Zwischenwand | 41 | Unterseite |
| 12 | Querrichtung | 42 | Gehäuseaufnahme |
| 13 | Gehäusefrontseite | 43 | Signalleiter |
| 14 | Steckplatz | 43a-e | Ausführungsvariante (des Signalleiters) |
| 15 | Schutzschalter | | |
| 16 | Kontaktöffnung | 44 | Leiterelement |
| 17 | Steckkontakt | 45 | Querende |
| 18 | Kontaktöffnung | 46 | Kontaktelement |
| 19 | Steckkontakt | 47 | Querende |
| 20 | Kontaktöffnung | 48 | Kontaktelement |
| 21 | Signalkontakt | 49 | Anschlusskontakt |
| 22 | Kanal | 54 | Frontseite |
| 23 | Oberseite | 55 | Bohrung |
| 24 | Abdeckung | 56 | Oberseite |
| 25 | Filmscharnier | 57 | Nut |
| 26 | Freiende | 58 | Schraubanschluss |
| 27 | Rastelement | 59 | Führungszapfen |
| 28 | Widerlager | 60 | Durchführung |
| 29 | Gehäuseaufnahme | 61 | Durchführung |
| 30 | Anschlussbuchse | 62 | Öffnung |
| A | Querschnitt | | |
| E1 | Ebene | | |
| E2 | Ebene | | |
| E3 | Ebene | | |
| P | Signalpfad | | |
| P' | Signalpfad | | |
| P" | Signalpfad | | |
| K | Punkt | | |

## Patentansprüche

1. Stromverteiler (1) mit einer ersten Hauptstromschiene (2) als Hauptstromzuführung sowie mit einer Anzahl von jeweils einem Schutzschalter (15) zugeordneten und entlang der gemeinsamen, ununterbrochen geführten Hauptstromschiene aufreihbaren Stromverteilermodulen (4), von denen jedes eine erste Anschlussleitung (31) zur Stromzuführung an einen Verbraucherstromkreis umfasst,
- wobei das oder jedes Stromverteilermodul (4) ein Gehäuse (6) aufweist, an dessen Gehäusefrontseite (13) ein Steckplatz (14) zum Aufstecken des zugeordneten Schutzschalters (15) ausgebildet ist, und das in einer Querrichtung (12) von einem ersten Kanal (22) zur Aufnahme der ersten Hauptstromschiene (2) durchsetzt ist, und
- wobei über eine erste Kontaktöffnung (16) des Steckplatzes (14) die in dem ersten Kanal (22) einliegende erste Hauptstromschiene (2), und über eine zweite Kontaktöffnung (18) des Steckplatzes (14) eine in einer Gehäuseaufnahme (29) einliegende Anschlussbuchse (30) der ersten Anschlussleitung (31) kontaktierbar sind,
**dadurch gekennzeichnet,**
**dass** das Gehäuse (6) des oder jeden Stromverteilermoduls (4) an einer Gehäusestirnseite (8) durch einen Gehäuseboden (7) im Wesentlichen abgeschlossen ist, von dem Gehäuseseitenwände (9) in Querrichtung abstehen, und dass das Gehäuse zu der dem Gehäuseboden (7) gegenüberliegenden Gehäusestirnseite (10) hin offen ist.

2. Stromverteiler (1) nach Anspruch 1,
**gekennzeichnet durch**
eine zweite Hauptstromschiene (3) als Hauptstromableitung, wobei das oder jedes Stromverteilermodul (4) einen das Gehäuse (6) in Querrichtung (12) durchsetzenden zweiten Kanal (40) zur Aufnahme der zweiten Hauptstromschiene (3) sowie eine zweite Anschlussleitung (36) zur Stromrückführung aus dem Verbraucherstromkreis aufweist, die in den zweiten Kanal (40) hineingeführt ist.

3. Stromverteiler (1) nach Anspruch 1 oder 2,
**gekennzeichnet durch**
mindestens zwei Stromverteilermodule (4), die derart stirnseitig aneinandergereiht sind, dass einander entsprechende Kanäle (22,40) fluchten.

4. Stromverteiler (1) nach einem der Ansprüche 1 bis 3,
**dadurch gekennzeichnet,**
**dass** der oder jeder Kanal (22,40) an einer Gehäuseseitenfläche (23,41) des oder jeden Stromverteilermoduls (4) angeordnet und mittels einer Abdeckung (24) zu dieser Gehäuseseitenfläche (23,41) hin aufdeckbar und abdeckbar ist, so dass bei geöffneter Abdeckung (24) der oder jeder Kanal (22,40) an dieser Gehäuseseitenfläche (23,41), insbesondere zur Einlegung der zugehörigen Hauptstromschiene (2,3), von außen her zugänglich ist.

5. Stromverteiler (1) nach Anspruch 4,
**dadurch gekennzeichnet,**
**dass** die oder jede Abdeckung (24) als mittels eines Filmscharniers (25) am Gehäuse (6) befestigte Klapplasche ausgebildet ist.

6. Stromverteiler (1) nach einem der Ansprüche 1 bis 5,
**dadurch gekennzeichnet,**
**dass** ein Anschlussende (33,38) der oder jeder Anschlussleitung (31,36) an einer Rückwand (35) des Gehäuses (6) des oder jeden Stromverteilermoduls (4) von außen zugänglich ist.

7. Stromverteiler (1) nach Anspruch 6,
**dadurch gekennzeichnet,**
**dass** das oder jedes Anschlussende (33,38) aus der Rückwand (35) nach außen hervorsteht.

8. Stromverteiler (1) nach einem der Ansprüche 1 bis 7,
**dadurch gekennzeichnet,**
**dass** die Anschlussbuchse (30) der ersten Anschlussleitung (31) des oder jeden Stromverteilermoduls (4) mit Spiel in der zugehörigen Gehäuseaufnahme (29) aufgenommen ist.

9. Stromverteiler (1) nach einem der Ansprüche 1 bis 8,
**dadurch gekennzeichnet,**
**dass** die erste Anschlussleitung (31) des oder jeden Stromverteilermoduls (4) ein ortsfest im Gehäuse (6) fixiertes, starres Leiterelement (32) aufweist, das mit der Anschlussbuchse (30) mittels einer Litzenverbindung (34) mechanisch flexibel und elektrisch leitend verbunden ist.

10. Stromverteiler (1) nach einem der Ansprüche 1 bis 9,
**dadurch gekennzeichnet,**
**dass** mindestens ein Stromverteilermodul (4) mindestens einen Signalleiter (43,52,53) umfasst, der ein an einer Gehäusestirnseite (8) angeordnetes erstes Kontaktelement (46) und ein an der entgegengesetzten Gehäusestirnseite (10) angeordnetes zweites Kontaktelement (48) zur Kontaktierung eines Signalleiters (43,52,53) eines benachbarten Stromverteilermoduls (4) aufweist.

11. Stromverteiler (1) nach Anspruch 10,
**dadurch gekennzeichnet,**
**dass** das erste Kontaktelement (46) und das zweite Kontaktelement (48) zueinander im Sinne eines Stecker-Buchsen-Paares komplementär ausgebildet sind.

12. Stromverteiler (1) nach einem der Ansprüche 1 bis 11,
**dadurch gekennzeichnet,**
**dass** mindestens ein Stromverteilermodul (4) mindestens einen Signalleiter (43,52,53) umfasst, der ein an einer Gehäusestirnseite (8,10) angeordnetes Kontaktelement (46,48) zur Kontaktierung eines Signalleiters (43,52,53) eines benachbarten Stromverteilermoduls (4) sowie einen mit einer weiteren Kontaktöffnung (20) des Steckplatzes (14) korrespondierenden Anschlusskontakt (49) zur Kontaktierung eines Signalkontakts (21) des Schutzschalters (15) aufweist.

13. Stromverteiler (1) nach einem der Ansprüche 1 bis 12,
**dadurch gekennzeichnet,**
**dass** die erste Hauptstromschiene (2) jeweils eine zu der ersten Kontaktöffnung (16) des Steckplatzes (14) eines jeden Stromverteilermoduls (4) fluchtende Kontaktaufnahme (55) aufweist.

14. Stromverteiler (1) nach einem der Ansprüche 1 bis 13,
**dadurch gekennzeichnet,**
**dass** die oder jede Hauptstromschiene (2,3) als massive Metallschiene mit rechteckigem Querschnitt (A) ausgebildet ist.

15. Stromverteiler (1) nach Anspruch 14,
**dadurch gekennzeichnet,**
**dass** der Querschnitt (A) der oder jeder Hauptstromschiene (2,3) einen Flächeninhalt zwischen 250 mm² und 700 mm² aufweist.

16. Stromverteiler (1) nach einem der Ansprüche 1 bis 15,
**gekennzeichnet durch**
eine auf eine Gehäusestirnseite (8,10) des Gehäuses (6) eines Stromverteilermoduls (4) aufgesetzte Abschlussplatte (5), die jeweils eine mit dem oder jeden Kanal (22,40) des Gehäuses (6) fluchtende Durchführung (60,61) aufweist.

## Claims

1. Power distributor (1) having a first main power rail (2) as a main power supply as well as having a number of power distributor modules (4) which are each allocated to a circuit breaker (15) and are able to be lined up along the mutual, uninterruptedly guided main power rail, each of which comprising a first connection cable (31) for the power supply to a consumer circuit,
- wherein the or each power distributor module (4) has a housing (6), on the housing front side (13) of which a slot (14) is formed for the insertion of the allocated circuit breaker (15) and which is pushed through in a transverse direction (12) by a first channel (22) for the reception of the first main power rail (2), and
- wherein the first main power rail (2) enclosed in the first channel (22) is able to be connected via a first contact opening (16) of the slot (14), and a connection socket (30) of the first connection cable (31) enclosed in a housing recess (29) is able to be connected via a second contact opening (18) of the slot (14),
**characterised in that**,
the housing (6) of the or each power distributor module (4) is fundamentally closed at a housing face side (8) by a housing floor (7), from which housing side walls (9) protrude in the transverse direction, and **in that** the housing is open to the housing face side (10) lying opposite the housing floor (7).

2. Power distributor (1) according to claim 1,
**characterised by**
a second main power rail (3) as a main power drain, wherein the or each power distribution module (4) has a second channel (40), which pushes through the housing (6) in the transverse direction (12) for the reception of the second main power rail (3), as well as a second connection cable (36) for the return current from the consumer circuit, which is fed into the second channel (40).

3. Power distributor (1) according to claim 1 or 2,
**characterised by**
at least two power distributor modules (4), which are connected together on the face side in such a way that corresponding channels (22, 40) align with one another.

4. Power distributor (1) according to one of claims 1 to 3,
**characterised in that**,
the or each channel (22, 40) is arranged on a housing side surface (23, 41) of the or each power distribution module (4) and is able to be covered or uncovered with respect to this housing side surface (23, 41) by means of a cover (24), such that, in the case of an open cover (24), the or each channel (22, 40), on this housing side surface (23, 41), in particular for the enclosing of the related main power rails (2, 3), is accessible from the outside.

5. Power distributor (1) according to claim 4,
**characterised in that**,
the or each cover (24) is formed as a closure flap fixed on the housing (6) by means of a film hinge (25).

6. Power distributor (1) according to one of claims 1 to 5,
**characterised in that**,
a connection end (33, 38) of the or each connection cable (31, 36) is accessible from the outside on a back wall (35) of the housing (6) of the or each power distribution module (4).

7. Power distributor (1) according to claim 6,
**characterised in that**,
the or each connection end (33, 38) protrudes outwards from the back wall (35).

8. Power distributor (1) according to one of claims 1 to 7,
**characterised in that**,
the connection socket (30) of the first connection cable (31) of the or each power distributor module (4) is received with play in the related housing recess (29).

9. Power distributor (1) according to one of claims 1 to 8,
**characterised in that**,
the first connection cable (31) of the or each power distributor module (4) has a rigid conductor element (32) that is fixed in a stationary manner in the housing (6), said conductor element (32) being connected mechanically, flexibly and in an electrically conductive manner to the connection socket (30) by means of a cord connection (34).

10. Power distributor (1) according to one of claims 1 to 9,
**characterised in that**,
at least one power distributor module (4) comprises at least one signal conductor (43, 52, 53), which has a first contact element (46) arranged on a housing face side (8) and a second contact element (48) arranged on the opposing housing front side (10) for the connection of a signal conductor (43, 52, 53) of an adjacent power distributor module (4).

11. Power distributor (1) according to claim 10,
**characterised in that**,
the first contact element (46) and the second contact element (48) are formed to be complementary to each other in the sense of a plug-socket pair.

12. Power distributor (1) according to one of claims 1 to 11,
**characterised in that**,
at least one power distributor module (4) comprises at least one signal conductor (43, 52, 53), which has a contact element (46, 48) arranged on a housing face side (8, 10) for connecting a signal conductor (43, 52, 53) of an adjacent power distribution module (4) as well as a connection contact (49) corresponding to a further contact opening (20) of the slot (14) for the connection of a signal contact (21) of the circuit breaker (15).

13. Power distributor (1) according to one of claims 1 to 12,
**characterised in that**,
the first main power rail (2) has a contact receiver (55) aligned respectively to the first contact opening (16) of the slot (14) of each power distributor module (4).

14. Power distributor (1) according to one of claims 1 to 13,
**characterised in that**,
the or each main power rail (2, 3) is formed as a massive metal rail with a right-angled cross-section (A).

15. Power distributor (1) according to claim 14,
**characterised in that**,
the cross-section (A) of the or each main power rail (2, 3) has a surface area of between 250mm² and 700mm².

16. Power distributor (1) according to one of claims 1 to 15,
**characterised by**
an end plate (5) set on a housing face side (8, 10) of the housing (6) of a power distributor module (4), said end plate (5) having a conduit (60, 61) aligned with the or each channel (22, 40) of the housing (6).

## Revendications

1. Système de distribution de courant (1) comprenant une première barre omnibus principale (2) en tant qu'alimentation principale de courant, ainsi qu'un certain nombre de modules de distribution de courant (4), qui sont associés chacun respectivement à un disjoncteur de protection (15), et peuvent être montés en rangée le long de la barre omnibus principale commune s'étendant de manière continue, et dont chacun comprend un premier conducteur de raccordement (31) pour l'alimentation en courant d'un circuit de courant récepteur, système
- dans lequel le ou chaque module de distribution de courant (4) comporte un boitier (6) sur le côté avant de boitier (13) duquel est formé un emplacement d'enfichage (14) prévu pour y enficher le disjoncteur de protection (15) associé, et qui est traversé, dans une direction transversale (12), par un premier canal (22) destiné à accueillir la première barre omnibus principale (2), et
- dans lequel, par l'intermédiaire d'une première ouverture de contact (16) de l'emplacement d'enfichage (14), il est possible de venir contacter la première barre omnibus principale (2) placée dans le premier canal (22), et par l'intermédiaire d'une deuxième ouverture de contact (18) de l'emplacement d'enfichage (14), il est possible de venir contacter une douille de raccordement (30) du premier conducteur de raccordement (31), qui est logée dans un logement de boitier (29),
**caractérisé**
**en ce que** le boitier (6) du ou de chaque module de distribution de courant (4) est sensiblement fermé sur un côté frontal de boitier (8), par un fond de boitier (7) duquel font saillie dans la direction transversale, des parois latérales de boitier (9), et en ce que le boitier est ouvert vers le côté frontal de boitier (10) situé à l'opposé du fond de boitier (7).

2. Système de distribution de courant (1) selon la revendication 1,
**caractérisé**
**par** une deuxième barre omnibus principale (3) en tant que retour de courant principal, le ou chaque module de distribution de courant (4) présentant un deuxième canal (40), qui traverse le boitier (6) dans la direction transversale (12) et est destiné à accueillir la deuxième barre omnibus principale (3), ainsi qu'un deuxième conducteur de raccordement (36), qui est destiné au retour de courant à partir du circuit de courant récepteur, et est mené à l'intérieur du deuxième canal (40).

3. Système de distribution de courant (1) selon la revendication 1 ou la revendication 2,
**caractérisé**
**par** au moins deux modules de distribution de courant (4) qui sont montés côte à côte, en rangée, de manière à ce que les canaux (22, 40) mutuellement respectifs soient alignés.

4. Système de distribution de courant (1) selon l'une des revendications 1 à 3,
**caractérisé**
**en ce que** le ou chaque canal (22, 40) est agencé sur une surface latérale de boitier (23, 41) du ou de chaque module de distribution de courant (4) et peut être découvert ou recouvert vers cette surface latérale de boitier (23, 41) au moyen d'un cache de recouvrement (24), de sorte que pour un cache de recouvrement (24) ouvert, le ou chaque canal (22, 40) sur cette surface latérale de boitier (23, 41) est accessible de l'extérieur, notamment pour y insérer la barre omnibus principale (2, 3) respectivement associée.

5. Système de distribution de courant (1) selon la revendication 4,
**caractérisé**
**en ce que** le ou chaque cache de recouvrement (24) est réalisé en tant que volet basculant fixé au boitier (6) moyennant une charnière à film (25).

6. Système de distribution de courant (1) selon l'une des revendications 1 à 5,
**caractérisé**
**en ce qu'**une extrémité de raccordement (33, 38) du ou de chaque conducteur de raccordement (31, 36) est accessible de l'extérieur au niveau d'une paroi arrière (35) du boitier (6) du ou de chaque module de distribution de courant (4).

7. Système de distribution de courant (1) selon la revendication 6,
caractérisé
que l'extrémité ou chaque extrémité de raccordement (33, 38) fait saillie vers l'extérieur hors de la paroi arrière (35).

8. Système de distribution de courant (1) selon l'une des revendications 1 à 7,
**caractérisé**
**en ce que** la douille de raccordement (30) du premier conducteur de raccordement (31) du ou de chaque module de distribution de courant (4), est logée avec jeu dans le logement de boitier (29) associé.

9. Système de distribution de courant (1) selon l'une des revendications 1 à 8,
**caractérisé**
**en ce que** le premier conducteur de raccordement (31) du ou de chaque module de distribution de courant (4) comprend un élément conducteur (32) rigide, qui est fixé en position fixe dans le boitier (6), et relié de manière flexible sur le plan mécanique et conductrice sur le plan électrique à la douille de raccordement (30), au moyen d'une liaison par tresse (34).

10. Système de distribution de courant (1) selon l'une des revendications 1 à 9,
**caractérisé**
**en ce qu'**au moins un module de distribution de courant (4) comporte au moins un conducteur de transmission de signal (43, 52, 53), qui présente un premier élément de contact (46) agencé sur un côté frontal de boitier (8), et un deuxième élément de contact (48) agencé sur le côté frontal de boitier (10) opposé, pour contacter un conducteur de transmission de signal (43, 52, 53) d'un module de distribution de courant (4) voisin.

11. Système de distribution de courant (1) selon la revendication 10,
**caractérisé**
**en ce que** le premier élément de contact (46) et le deuxième élément de contact (48) sont réalisés de manière mutuellement complémentaire, à la manière d'une paire de connexion fiche-douille.

12. Système de distribution de courant (1) selon l'une des revendications 1 à 11,
**caractérisé**
**en ce qu'**au moins un module de distribution de courant (4) comprend au moins un conducteur de transmission de signal (43, 52, 53), qui présente un élément de contact (46, 48) agencé sur un côté frontal de boitier (8, 10) et destiné à contacter un conducteur de transmission de signal (43, 52, 53) d'un module de distribution de courant (4) voisin, ainsi qu'un contact de raccordement (49) en correspondance avec une autre ouverture de contact (20) de l'emplacement d'enfichage (14), pour venir contacter un contact de signal (21) du disjoncteur de protection (15).

13. Système de distribution de courant (1) selon l'une des revendications 1 à 12,
**caractérisé**
**en ce que** la première barre omnibus principale (2) comporte un logement de réception de contact (55), aligné avec la première ouverture de contact (16) respective de l'emplacement d'enfichage (14) de chaque module de distribution de courant (4).

14. Système de distribution de courant (1) selon l'une des revendications 1 à 13,
**caractérisé**
**en ce que** la ou chaque barre omnibus principale (2, 3) est réalisée sous forme de rail métallique massif à section transversale (A) rectangulaire.

15. Système de distribution de courant (1) selon la revendication 14,
**caractérisé**
**en ce que** la section transversale (A) de la ou de chaque barre omnibus principale (2, 3) présente une valeur de surface comprise entre 250 mm² et 700 mm².

16. Système de distribution de courant (1) selon l'une des revendications 1 à 15,
**caractérisé**
**par** une plaque de fermeture (5), qui est rapportée sur un côté frontal de boitier (8, 10) du boitier (6) d'un module de distribution de courant (4), et présente une ouverture de passage (60, 61) respectivement alignée sur un ou chaque canal (22, 40) du boitier (6).
